# EUROPEAN PATENT SPECIFICATION

(11) **EP 2 857 083 B1**
(45) Date of publication and mention of the grant of the patent: **27.12.2017**
(21) Application number: 14198842.8
(22) Date of filing: 21.04.2010
(51) Int. Cl.: B01D 47/00, B01D 46/00, A47L 1/05, A47L 1/08, A47L 9/18, A47L 11/40

(54) **Water filtering device equipped with water level adjustment unit**
Mit einer Wasserstandsanpassungseinheit ausgestattete Wasserfiltrierungsvorrichtung
Dispositif de filtrage d'eau équipé d'une unité de réglage de niveau d'eau

(30) Priority: 19.11.2009 KR 20090111791
(43) Date of publication of application: 08.04.2015
(62) Divisional of application: 10831698.5
(73) Proprietor: Samsung Electronics Co., Ltd., Gyeonggi-do 16677 (KR)
(72) Inventor: Park, Joung-Soo, 560-894 Jeollabuk-do, (KR); Park, Heung-Jun, 506-020 Gwangju (KR); Joo, Sung-Tae, 506-306 Gwangju (KR); Kim, Min-Ha, 506-901 Gwangju (KR); Yang, Dong-Houn, Gwangju 502-808 (KR); Lee, Jong-Kwon, 506-306 Gwangju (KR)
(74) Representative: Hewett, Jonathan Michael Richard

(56) References cited:
- WO-A1-2004/075710
- DE-A1- 2 119 028
- DE-C- 206 046
- US-A1- 2001 045 399

## Description

The present invention relates generally to a water filtering device, and more particularly to a water filtering device equipped with a water level adjustment unit for an electric cleaner.

In general, an electric cleaner creates a vacuum therein using a motor fan to perform cleaning using the created vacuum, and due to its electrical characteristic, it is normally used to keep away from moisture or water. On the other hand, in order to heighten the dust collection efficiency, a wet vacuum cleaner using water has been widely used.

In such a cleaner, a dust tank, in which dust is collected, is filled with water at a predetermined water level. In order to prevent an overflow due to supercharged water supply or the decrease of the dust collection efficiency due to low-level water supply, an appropriate water level (amount of water) is set, and water supply to the dust tank is performed to suit the set water level.

Here, the appropriate water level (amount of water) means a water level (amount of water) that is set when the best dust collection efficiency is achieved without generating the overflow through experiments in which the cleaner is operated after water is supplied into the dust tank at various water levels (amounts of water) in the product development process.

Korean Unexamined Patent Application Publication No. 2008-0114668 (related art 1) discloses a construction in which a bracket having a mount groove is installed on a lower portion of an inlet of a water storage tank and an overflow prevention structure is inserted into the mount groove. This construction prevents the overflow in a manner that, when the water storage tank is filled with water, the overflow prevention structure ascends due to buoyancy to close the inlet.

Korean Patent Registration No. 0113197 (related art 2) discloses a structure in which a water inlet for supplementing water is formed on one side of an upper portion of a water storage tank and a floater that ascends/descends depending on the amount of water in the storage tank to prevent the overflow is installed in the storage tank.

However, the related art 1 and the related art 2 as described above merely disclose the structures for preventing the water stored in the water tank from overflowing the water tank, but fail to disclose a structure for adjusting the water level of a water filtering device which removes dust in dust-containing air that flows in from outside using the water.

US 2001/045399 relates to a carpet cleaning device having a filter for removing debris from a wastewater stream. DE 206 046 relates to a vacuum cleaner having an integrated washing hose. WO 2004/075710 relates to a vacuum cleaner for wet and dry cleaning.

In the water filtering device, an appropriate water level is directly linked to not only the overflow but also the dust collection efficiency, and thus it is important for a user to constantly keep the water level while operating the water filtering device. Accordingly, the inventor has been making a study of a water filtering device whereby a user can conveniently keep the appropriate water level thereof.

The present invention has been made to address at least the above problems and/or disadvantages and to provide at least the advantages described below. Accordingly, an aspect of the present invention provides a water filtering device equipped with a water level adjustment unit which can appropriately adjust the level of water therein.

According to an aspect of the present invention, there is provided a water filtering device according to claim 1. Optional features are set out in the dependent claims.

According to one example of a configuration not falling within the scope of the claims, a water filtering device equipped with a water level adjustment unit includes an external air inlet through which dust-containing air flows in; a dust separation portion communicating with the external air inlet and separating dust in the inflow air; exhaust outlets communicating with the dust separation portion and discharging the air from which the dust has been separated; a dust container portion communicating with the dust separation portion and being filled with water; and a water level adjustment unit installed in the dust container portion to adjust the level of the water in the dust container portion, wherein the water level adjustment unit
includes a supercharged water drainage tube installed on a bottom of the dust container portion; and a manual opening/closing means (herein all references to which refer to embodiments relating to the opening/closing valve do not falling within the scope of the claims) for selectively adjusting the level of the water through the supercharged water drainage tube. Accordingly, a user can constantly keep an appropriate level of the water in the dust container portion of the water filtering device that separates the dust in the air.

The manual opening/closing means includes an opening/closing valve opening and closing the supercharged water drainage tube; a valve holder plate supporting the opening/closing valve; and a sealing piece provided on the opening/closing valve.

One end of the opening/closing valve may be configured to be elastically supported by an elastic means.

One end of the supercharged water drainage tube may be configured to be inclined.

The manual opening/closing means may be configured to be installed on an outer surface of the bottom of the dust container portion.

The water level adjustment unit may further include a sealing member separating an inner space of the dust container portion into a peripheral area in which the supercharged water drainage tube is installed and other areas.

It is preferable that a soft sealing ring is attached to a lower end of the sealing member.

The supercharged water drainage tube may be a tube which is penetrated on both ends and is provided with one end that projects from the bottom surface of the inner side of the dust container portion with an appropriate height and the other end that communicates with an outer side of the dust container portion to drain the water to outside.

The water level adjustment unit according to the invention includes, instead of the manual opening/closing means, a floater mounted on one end of the supercharged water drainage tube to open and close the supercharged water drainage tube depending on the water level.

The floater may be configured to further include an arm portion that is inserted into an upper end opening of the supercharged water drainage tube.

The water level adjustment unit may further include a sealing member separating an inner space of the dust container portion into a peripheral area in which the supercharged water drainage tube is installed and other areas.

A soft sealing ring may be attached to a lower end of the sealing member.

### ADVANTAGEOUS EFFECTS

According to the present invention, since the level of the water contained in the water filtering device can be easily adjusted to an appropriate level, high dust collection efficiency can be achieved.

Further, the overflow of water can be prevented while the cleaner operates or is moved.

Further, since the peripheral area in which the supercharged water drainage tube is installed is separated by the sealing member, the supercharged water drainage tube and water distribution ports are prevented from being polluted and clogged while the cleaner operates or is moved.

Further, since the first dust collection area and the second dust collection area communicate with each other so that water flows between the first and second collection areas, and thus the balance of water level between the first and second collection areas is prevented from being broken.

The above and other aspects, features and advantages of the present invention will be more apparent from the following detailed description when taken in conjunction with the accompanying drawings, in which:
FIG. 1 is a perspective view illustrating a water filtering device according to an embodiment of the present invention;
FIG. 2 is an exploded perspective view illustrating a water filtering device according to an example not falling within the scope of the claims;
FIG. 3, not falling within the scope of the claims, is a cross-sectional view taken along line V-V' of FIG. 1;
FIG. 4, not falling within the scope of the claims, is a partially cut-away perspective view illustrating only a dust container portion in FIG. 3;
FIG. 5 is an exploded perspective view illustrating a dust container portion of a water filtering device according to an example not falling within the scope of the claims;
FIG. 6 is a cross-sectional view of a main part showing the operation of a manual water level adjustment unit applied to a dust container portion of a water filtering device according to an example not falling within the scope of the claims;
FIG. 7 is a cross-sectional view of a main part showing the operation of an automatic water level adjustment unit applied to a dust container portion of a water filtering device according to another embodiment of the present invention; and
FIG. 8 is a cross-sectional view illustrating a drainage tube unit of a water filtering device according to an embodiment of the present invention.

Hereinafter, preferred embodiments of the present invention will be described in detail with reference to the accompanying drawings.

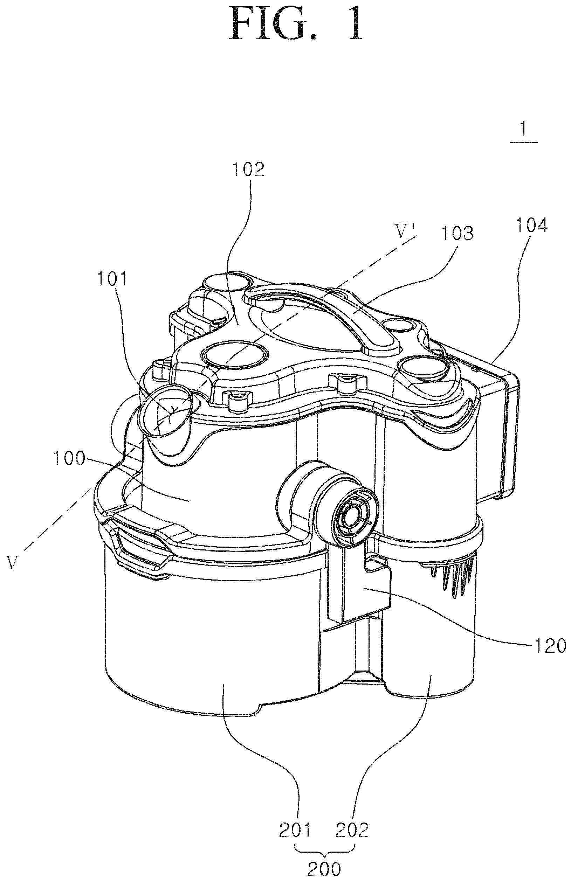

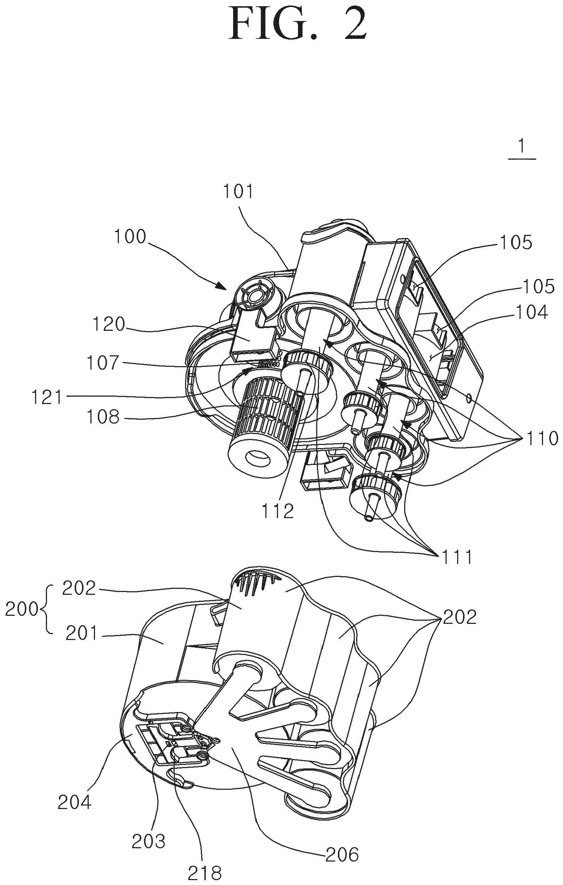

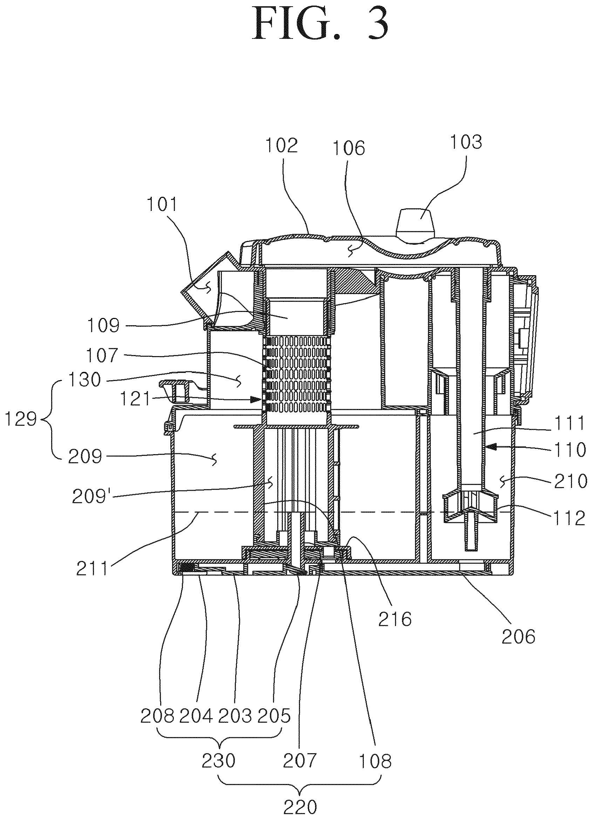

FIG. 1 is a perspective view illustrating a water filtering device 1 equipped with a water level adjustment unit 220 (see FIG. 3) according to an embodiment of the present invention. FIG. 2 (not falling within the scope of the claims) is an exploded perspective view illustrating the water filtering device, and FIG. 3 is a cross-sectional view taken along line V-V' of FIG. 1. The drawing reference numeral 200 denotes a dust container portion in which supplied water is stored and collected dust is accumulated.

Referring to FIGS. 1 to 3, a water filtering device 1 according to an embodiment of the present invention briefly includes a dust container portion 200 and a body portion 100 which generates a rotating air flow to separate dust from dusty air that contains dust. The body portion 100 has airflow paths formed thereon, and serves as a cover of the dust container portion 200.

Referring to FIGS. 2 and 3, the body portion 100 includes a rotating airflow generator 101, an exhaust tube unit 121, a first exhaust chamber 106, and four inlet tube units 110.

The rotating airflow generator 130 is a part of the dust separation portion 129, and is formed on an upper side of a first dust collection area 209 to change dust-containing airflow flowing through an external air inlet 101 to a downward rotating airflow. Here, the dust separation portion 129 is composed of the rotating airflow generator 130 and the first dust collection area 209.

The exhaust tube unit 121 is a path through which first purified air, from which dust is primarily filtered through the dust separation portion 129 and the first dust collection area 209, flows to the first exhaust chamber 106, and a grill portion 107 having a plurality of holes formed thereon to filter large-size dust and an exhaust tube 109 are integrally connected to each other.

The first exhaust chamber 106 communicates with the exhaust tube unit 121 to collect the first purified air, and is blocked from outside by a first exhaust chamber cover 102.

The four inlet tube units 110 communicate with the first exhaust chamber 106 to send the first purified air to a second dust collection area 210.

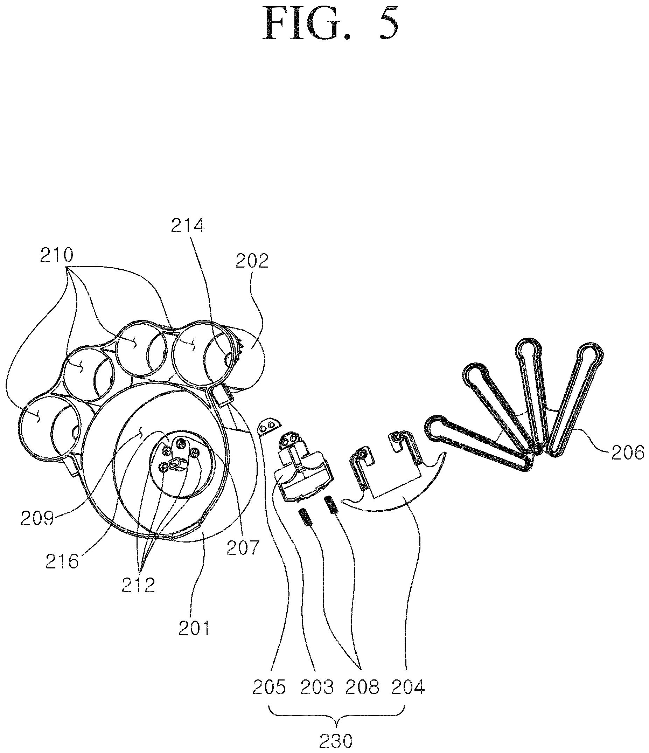

The dust container portion 200 is partitioned into the first dust collection area 209 and four second dust collection areas 210 (see FIG. 5), and includes a first dust container 201 and four second dust containers 202.

The first dust container 201 accommodates the exhaust tube unit 121, and the four second dust containers 202 accommodate the inlet tube units 110, respectively, to form the dust collection areas 209 and 210.

The operation of the water filtering device 1 as configured above according to an embodiment of the present invention will be described with reference to FIG. 3.

If the vacuum cleaner is operated, dust-containing air having flowed through a cleaning nozzle potion (not illustrated) flows into the water filtering device 1 through the external air inlet 101 that is formed to be inclined on an upper corner of the body portion 100.

The inflow dust-containing air passes through the rotating airflow generator 130 to form a downward rotating airflow. This downward rotating airflow is decelerated while passing through the first dust collection area 209 of the first dust container 201 that is filled with water at an appropriate water level, and the dust is primarily collected in a manner that a part of the dust falls due to gravity and another part of the dust becomes in contact with water.

The first purified airflow primarily processed is collected in the first exhaust chamber 106 through the grill portion 107 and the exhaust tube 109.

The first exhaust chamber 106 communicates with respective inlet tubes 111 of four inlet tube units 110, and at a lower end of each inlet tube 111, a rotating airflow generation nozzle 112 is installed to generate a downward rotating airflow.

Accordingly, a downward rotating airflow is generated in a second dust collection area 210 of the second dust container 202 that is filled with water at an appropriate level 211, and a secondary dust collection is performed while the first purified airflow collides with the stored water and ascends. The secondarily dust-collected purified air is discharged to outside through second exhaust outlets 105 and a purified air chamber 104.

In the vacuum cleaner adopting the water filtering device 1, it is preferable that water is supplied to the dust container portion 200 before operating the cleaner, and the polluted water is drained after using the cleaner. Further, during the water supply, it is preferable to keep the appropriate water level 211 to prevent the overflow of the supplied water and to achieve high dust collection efficiency while the cleaner is operated.

Here, the appropriate water level 211, as described in the "background art", means a water level 211 that is set when the best dust collection efficiency is achieved through experiments in which the cleaner is operated after water is supplied into the dust container portion 200 at various water levels 211 in the product development process, and has an experimental or experienced value.

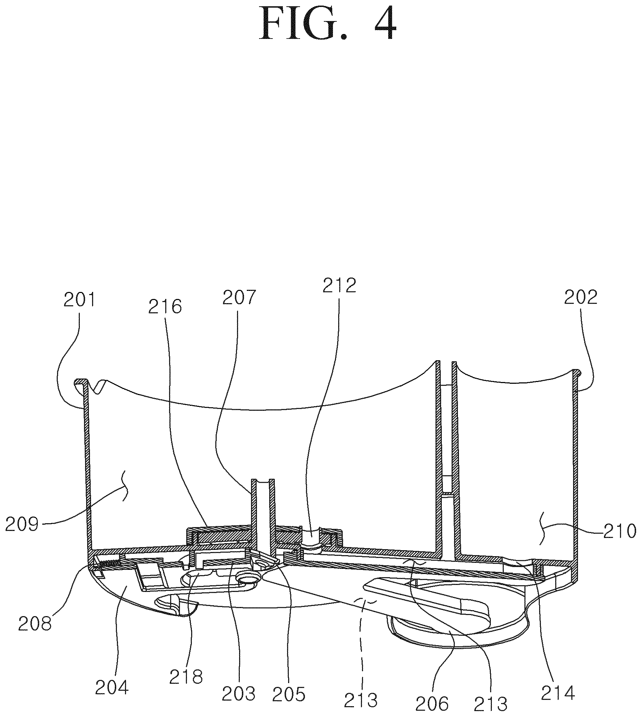

Now, the dust container portion 200 of the water filtering device 1 and the water supply thereto according to an embodiment of the present invention will be described in detail with reference to FIGS. 4 and 5.

FIG. 4 is a partially cut-away perspective view illustrating only a dust container portion 200 in FIG. 3, and FIG. 5 is an exploded perspective view illustrating a dust container portion 200 of a water filtering device 1 according to an embodiment of the present invention.

The dust container portion 200 that serves as a low-level water tank includes a first dust container 201 and four second dust containers 202 connected to the first dust container 201 through four water paths 213.

The water paths 213 are formed by water distribution path members 206 installed on the lower side of the dust container portion 200, and are independently connected to the second dust containers 202 around the first dust container 201.

That is, the water that is supplied to the first dust container 201 is supplied to the second dust containers 202 through the water paths, and the water that is supplied to the second dust containers 202 is supplied to the first dust container 201 through the water paths 213. However, direct water supply and drainage is not performed between the respective second dust containers 202.

On the center portion of an inner side of the first dust container 201, the supercharged water drainage tube 207 for discharging the water that is supplied over the appropriate water level 211 is formed to project as high as the appropriate water level 211. The lower side of the supercharged water drainage tube 207 communicates with the outside to drain the supercharged water that exceeds the water level corresponding to the upper end portion of the supercharged water drainage tube 207.

On portions that are somewhat apart from the supercharged water drainage tube 207 in the directions of the respective second dust containers, water distribution ports 212 that are connected to the water paths 213 are formed. Further, on the center portions of inner sides of the second dust containers 202, water supply ports 214 are formed to be connected to the respective water paths 213 so as to perform water supply and drainage.

Accordingly, the water supplied through the water distribution ports 212 and the water supply paths 213 of the first dust container 201 and the water supply ports 214 of the second dust containers 202 is distributed to keep the same water level.

In order to supply water to the dust container portion 200, the body portion 100 is separated in a manner that a locking knob 120 is rotated to be released from the body portion 100, and the body portion 100 is lifted up using a handle 103 provided at an upper end of the body portion 100 (see FIG. 1). Thereafter, water supply may be performed through an open upper portion of the dust container portion 100. It is preferable that the water supply is performed in a manner that the first dust container 201 is filled with water and the filled water is supplied to the second dust containers 202 through the water paths 213.

As the water level becomes higher through the water supply to the first dust container 201, the water is supplied to the four second dust containers 202 through the four water distribution ports 212 formed on the lower side of the first dust container 201 and the water paths 213 connected to the water distribution ports 212. If the water supply is finished, the water levels of the first dust container 201 and the second containers 202, which communicate with each other, become equal to each other.

As described above, the water level of the dust container portion 200 exerts an influence on the dust collection efficiency of the water filtering device 1. In order to prevent an overflow due to the supercharged water supply or the decrease of the dust collection efficiency due to the low-level water supply, it is preferable to adjust the water level to the appropriate water level 211.

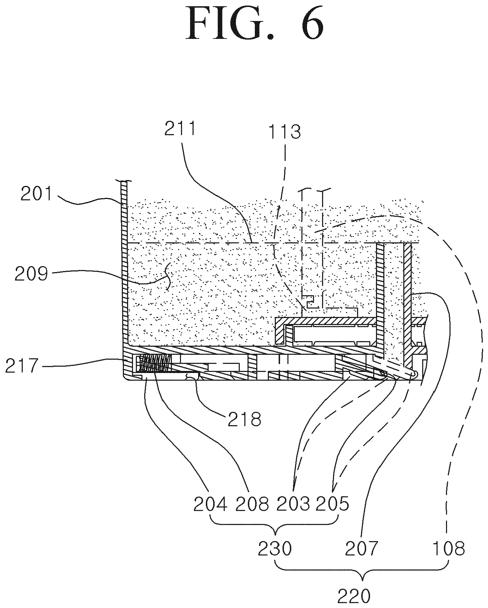

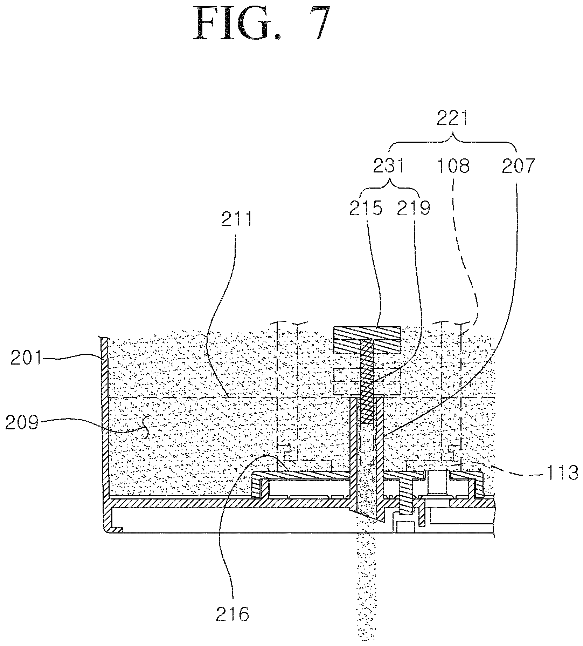

Next, a structure to set the water level of the dust container portion 200 to the appropriate level will be described in detail with reference to FIGS. 5 to 7. FIG. 5 is an exploded perspective view illustrating a dust container portion 200 of a water filtering device 1 according to an example not falling within the scope of the claims. FIG. 6 is a cross-sectional view of a main part showing the operation of a manual water level adjustment unit 220 (herein all references to which refer to examples not falling within the scope of the claims) applied to a dust container portion 200 of a water filtering device 1 according to an example not falling swithin the scope of the claims, and FIG. 7 is a cross-sectional view of a main part showing the operation of an automatic water level adjustment unit 221 applied to a dust container portion 200 of a water filtering device 1 according to another embodiment of the present invention. FIG. 7 shows an open state of an opening/closing valve 203 not falling within the scope of the claims and a floater 215 to drain the supercharged water. According to the present invention, the water level adjustment unit is the automatic water level adjustment unit 221.

In FIG. 6, not forming part of the present invention, the manual water level adjustment unit 220 includes a supercharged water drainage tube 207, a manual opening/closing means 230, and a sealing member 108.

The supercharged water drainage tube 207 is a tube which is penetrated on both ends, and is provided with one end that projects from the bottom surface of the inner side of the first dust container 201 with a height corresponding to the appropriate water level 211 and the other end that communicates with an outer side of the first dust container 201 to drain the water to the outside.

The manual opening/closing means 230 includes an opening/closing valve 203, a valve holder plate 204, a sealing piece 205, and a compression spring 208.

The left end of the opening/closing valve 203 is elastically supported by the compression spring 208 to be in a slightly compressed state against a rib 217 formed on the lower side of the first dust container 201, and a force is constantly applied toward the lower end opening of the supercharged water drainage tube 207.

At the lower end of the opening/closing valve 203, a finger groove 218 is formed to enable a user to open the opening/closing valve 203 using a finger, and the opening/closing valve is slidably supported by the valve holder plate 204 that is mounted to be elastically supported by the compression spring 208. One surface of the opening/closing valve 203 is in contact with the inclined end of the supercharged water drainage tube 207 at the same inclination angle.

As indicated by a solid line, in order to drain the supercharged water, the supercharged water in the dust container portion 200 is drained until the water level reaches the appropriate level 211 in a state where the opening/closing valve 203 is pushed to the left to be opened as seen from the drawing. Further, as indicated by a dotted line, the sealing piece 205 attached to the right end of the opening/closing valve 203 closes up the lower end of the supercharged water drainage tube 207 to prevent the drainage of the water during the operation or movement of the cleaner.

Accordingly, if the user puts his/her finger onto the finger groove 218 and opens the opening/closing valve 203 through pushing of the opening/closing valve 203 to the left, the supercharged water in the dust container portion 200 is discharged to the left, the supercharged water in the dust container portion 200 is discharged to the outside. If the user takes off his/her finger from the finger groove 218 after confirming that the water is not drained any more through the supercharged water drainage tube 207, the opening/closing valve 203 is operated by a restoration force of the compression spring 208 and the sealing piece 205 attached to the opening/closing valve 203 closes up the lower end opening of the supercharged water drainage tube 207 to prevent the water from flowing out even in the case where the water in the dust container portion 200 is shaken.

The structure and operation of the sealing member 108 as indicated by a dotted line will now be described in detail.

In FIG. 7, the automatic water level adjustment unit 221 according to the invention includes a supercharged water drainage tube 207, an automatic opening/closing means 231, and a sealing member 108.

Since the supercharged water drainage tube 207 is the same as that according to the above-described embodiment, the detailed description thereof will be omitted.

The automatic opening/closing means 231 is a floater 215 that is mounted on an upper side of the supercharged water drainage tube 207 to move upward and downward depending on the water level. An arm portion 219 that is engaged with the lower portion of the floater 215 is inserted into the supercharged water drainage tube 207 and the floater 215 moves upward and downward depending on the water level to open or close the supercharged water drainage tube 207.

If the water level is higher than the appropriate water level 211, the floater 215 floats on the water and the supercharged water drainage tube 207 is opened to drain the water, and if the water level approaches the appropriate water level 211 through the drainage, the floater 215 gradually closes up the supercharged water drainage tube 207 to stop the drainage.

Accordingly, it is preferable that the floater 215 is made of a material having a greater specific gravity than water, such as Styrofoam.

However, since the floater 215 should serve as a valve that closes up the supercharged water drainage tube 207, it is preferable that the floater 215 is used in combination with a flexible material that is somewhat heavy and is suitable to the sealing, such as rubber.

Next, the sealing member 108 sealing the water distribution ports 212 distributing water between the first dust container 201 and the second dust containers 202 and the supercharged water drainage tube 207 will be described.

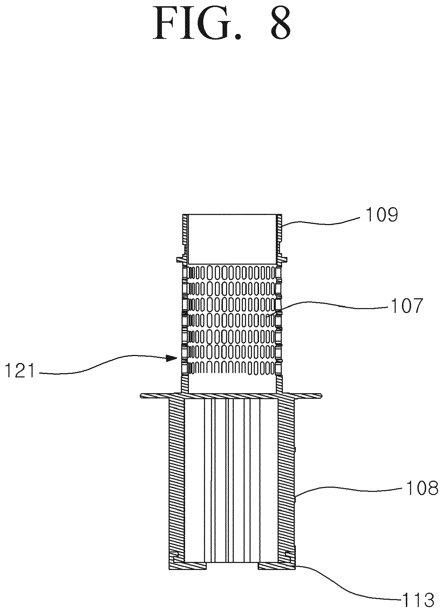

FIG. 8 is a cross-sectional view illustrating a drainage tube unit 121 of a water filtering device 1 according to an embodiment of the present invention. The sealing member 108 is integrally formed on the lower side of the grill portion 107 in the form of a cup turned upside down.

If the body portion 100 is engaged after the water level of the dust container portion 200 is appropriately adjusted, the sealing member 108 serves to block the supercharged water drainage tube 207 and the water distribution ports 212 from the first dust collection area 209 as illustrated in FIG. 3. That is, the sealing member 108 separates the inner space of the dust container portion 200 into a peripheral area 209' in which the supercharged water drainage tube 207 is installed and other areas.

This is to prevent the supercharged water drainage tube 207 and the water distribution ports 212 from being polluted and clogged while the cleaner operates or is moved, and to prevent the balance of the water levels between the first collection area and the second collection areas, which communicate with each other so that the water flows between them, from being broken.

For more perfect blocking, a soft sealing ring 113 such as rubber is inserted into the lower end portion of the sealing member 108 to achieve an effective sealing with a corresponding sealing surface 216 of the first dust container 201.

That is, the sealing ring 113 is seated on the sealing surface 216 to achieve the sealing and to close up the water distribution ports 213 formed on the sealing surface 216, and thus the connection between the first dust container 201 and the second dust containers 202 is intercepted not to cause the influence on the water levels therein during the operation or movement of the cleaner.

While the invention has been shown and described with reference to certain embodiments thereof, it will be understood by those skilled in the art that various changes in form and detail may be made therein without departing from the present invention, as defined by the appended claims.

The water filtering device equipped with drainage members according to the present invention can be applied to all electronic appliances, and representatively, to vacuum cleaners for home use, for industrial use, and for commercial use.

## Claims

1. A water filtering device (1) equipped with a water level adjustment unit (220), comprising:
an external air inlet (101) through which dust-containing air flows in;
a dust separation portion (129) communicating with the external air inlet and separating dust in the inflow air;
exhaust outlets (105) communicating with the dust separation portion (129) and discharging the air from which the dust has been separated;
a dust container portion (200) communicating with the dust separation portion (129) and being filled with water; and
a water level adjustment unit (221) installed in the dust container portion (200) to adjust the level of the water in the dust container portion (200),
wherein the water level adjustment (221) unit includes:
a supercharged water drainage tube (207) formed to project from a bottom surface of the dust container portion (200); and
**characterised in that:**
the water level adjustment unit (221) further comprises a floater (215) mounted on one end of the supercharged water drainage tube (207) to open and close the supercharged water drainage tube (207) depending on the water level.

2. The water filtering device as claimed in claim 1, wherein the floater further comprises an arm portion (219) that is inserted into an upper end opening of the supercharged water drainage tube.

3. The water filtering device as claimed in claim 1, wherein the water level adjustment unit further comprises a sealing member (108) separating an inner space of the dust container portion into a peripheral area in which the supercharged water drainage tube is installed and other areas.

4. The water filtering device as claimed in claim 3, wherein a soft sealing ring (113) is attached to a lower end of the sealing member.

## Patentansprüche

1. Eine Wasser filternde Vorrichtung (1), die mit einer Wasserstandsanpassungseinheit (220) ausgerüstet ist, beinhaltend:
einen externen Lufteinlass (101), durch den staubhaltige Luft einströmt;
einen Staubabscheidungsabschnitt (129), der mit dem externen Lufteinlass kommuniziert und Staub in der Einströmluft abscheidet;
Ausströmauslässe (105), die mit dem Staubabscheidungsabschnitt (129) kommunizieren und die Luft abgeben, von der der Staub abgeschieden wurde;
einen Staubbehälterabschnitt (200), der mit dem Staubabscheidungsabschnitt (129) kommuniziert und mit Wasser gefüllt wird; und
eine Wasserstandsanpassungseinheit (221), die im Staubbehälterabschnitt (200) installiert ist, um den Stand des Wassers im Staubbehälterabschnitt (200) anzupassen,
wobei die Wasserstandsanpassungseinheit (221) Folgendes umfasst:
eine überladenes Wasserableitungsrohr (207), das gebildet ist, um von einer Bodenfläche des Staubbehälterabschnitts (200) vorzustehen, und
**dadurch gekennzeichnet, dass:**
die Wasserstandsanpassungseinheit (221) ferner einen Schwimmer (215) beinhaltet, der an einem Ende des überladenen Wasserableitungsrohr (207) montiert ist, um das überladene Wasserableitungsrohr (207) abhängig vom Wasserstand zu öffnen und zu schließen.

2. Wasser filternde Vorrichtung gemäß Anspruch 1, wobei der Schwimmer ferner einen Armabschnitt (219) beinhaltet, der in eine obere Endöffnung des überladenen Wasserableitungsrohrs eingeführt ist.

3. Wasser filternde Vorrichtung gemäß Anspruch 1, wobei die Wasserstandsanpassungseinheit ferner ein Dichtungsglied (108) beinhaltet, das einen Innenraum der Staubbehälterabschnitts in einen peripheren Bereich, in dem das überladene Wasserableitungsrohr installiert ist, und andere Bereiche abteilt.

4. Wasser filternde Vorrichtung gemäß Anspruch 3, wobei ein weicher Dichtungsring (113) an einem unteren Ende des Dichtungsglieds angebracht ist.

## Revendications

1. Dispositif de filtrage d'eau (1) équipé d'une unité d'ajustement de niveau d'eau (220), comportant :
un orifice d'entrée d'air extérieur (101) au travers duquel de l'air contenant des poussières entre ;
une partie de séparation de poussières (129) communiquant avec l'orifice d'entrée d'air extérieur et séparant les poussières de l'air entrant ;
des orifices de sortie d'échappement (105) communiquant avec la partie de séparation de poussières (129) et déchargeant l'air en provenance duquel les poussières ont été séparées ;
une partie formant contenant de poussières (200) communiquant avec la partie de séparation de poussières (129) et étant remplie d'eau ; et
une unité d'ajustement de niveau d'eau (221) installée dans la partie formant contenant de poussières (200) à des fins d'ajustement du niveau de l'eau dans la partie formant contenant de poussières (200),
dans lequel l'unité d'ajustement de niveau d'eau (221) comprend :
un tuyau d'évacuation d'eau surcomprimée (207) formé à des fins de projection depuis une surface inférieure de la partie formant contenant de poussières (200) ; et **caractérisé en ce que :**
l'unité d'ajustement de niveau d'eau (221) comporte par ailleurs un flotteur (215) monté sur une extrémité du tuyau d'évacuation d'eau surcomprimée (207) servant à ouvrir et fermer le tuyau d'évacuation d'eau surcomprimée (207) en fonction du niveau d'eau.

2. Dispositif de filtrage d'eau selon la revendication 1, dans lequel le flotteur comporte par ailleurs une partie formant bras (219) qui est insérée dans une ouverture d'extrémité supérieure du tuyau d'évacuation d'eau surcomprimée.

3. Dispositif de filtrage d'eau selon la revendication 1, dans lequel l'unité d'ajustement de niveau d'eau comporte par ailleurs un élément d'étanchéité (108) séparant un espace intérieur de la partie formant contenant de poussières en une zone périphérique dans laquelle le tuyau d'évacuation d'eau surcomprimée est installé et d'autres zones.

4. Dispositif de filtrage d'eau selon la revendication 3, dans lequel un anneau d'étanchéité flexible (113) est attaché à une extrémité inférieure de l'élément d'étanchéité.
